# FASCICULE DE BREVET EUROPEEN

(11) **EP 3 268 426 B1**
(45) Date de publication et mention de la délivrance du brevet: **13.02.2019**
(21) Numéro de dépôt: 16709365.7
(22) Date de dépôt: 09.03.2016
(51) Int. Cl.: C08L 7/00, C08L 9/00, C08L 23/06, C08K 3/04

(54) **COMPOSITION DE CAOUTCHOUC À BASE DE PARTICULES DE POLYÉTHYLENE RÉTICULÉ**
KAUTSCHUKZUSAMMENSETZUNG AUF BASIS VERNETZTER POLYETHYLENPARTIKEL
RUBBER COMPOSITION BASED ON CROSS-LINKED POLYETHYLENE PARTICLES

(30) Priorité: 09.03.2015 FR 1551946
(43) Date de publication de la demande: 17.01.2018
(73) Titulaire: Compagnie Générale des Etablissements Michelin, 63000 Clermont-Ferrand (FR)
(72) Inventeur: VEGI, Garry, 63040 Clermont-Ferrand Cedex 09 (FR)
(74) Mandataire: Louret, Sylvain
(86) Numéro de dépôt international: PCT/EP2016/054962
(87) Numéro de publication internationale: WO 2016/142399

(56) Documents cités:
- WO-A1-2011/161222
- DE-T5-112013 002 860

## Description

La présente invention se rapporte à une composition de caoutchouc, utilisable notamment en vue de la fabrication de pneumatiques, ladite composition étant à base d'un élastomère diénique, d'une charge renforçante, d'un système de réticulation et de particules de polyéthylène réticulé.

L'invention se rapporte également à un pneumatique pourvu d'une couche interne, ladite couche comprenant ladite composition.

Les concepteurs de pneumatiques doivent respecter un cahier des charges strict qui fixe un grand nombre d'exigences techniques, souvent antinomiques. Les compositions de caoutchouc doivent notamment obéir à une exigence de rigidité suffisante tout en maintenant une bonne cohésion du mélange. L'amélioration combinée de ces propriétés reste une préoccupation constante chez les concepteurs, l'une se faisant généralement au détriment de l'autre.

Afin d'assurer une bonne rigidité, il est connu et habituel depuis de très nombreuses années, d'utiliser des pneumatiques et des compositions de caoutchouc dont les élastomères diéniques sont réticulés au soufre, cette réticulation étant alors nommée vulcanisation.

La vulcanisation des élastomères diéniques par le soufre est largement utilisée dans l'industrie du caoutchouc, en particulier celle du pneumatique. Pour vulcaniser les élastomères diéniques, on utilise un système de vulcanisation relativement complexe comportant, en plus du soufre, un accélérateur primaire de vulcanisation, tels que les sulfénamides à noyau benzothiazole, ainsi que divers accélérateurs secondaires ou activateurs de vulcanisation, tout particulièrement des dérivés du zinc tels que l'oxyde de zinc (ZnO) seul ou utilisé avec des acides gras.

Les sulfénamides à noyau benzothiazole utilisés comme accélérateurs primaires de vulcanisation sont par exemple la N-cyclohexyl-2-benzothiazyle sulfénamide (en abrégé « CBS »), la N,N-dicyclohexyl-2-benzothiazyle sulfénamide (en abrégé « DCBS »), la N-ter-butyl-2-benzothiazyle sulfénamide (en abrégé « TBBS ») et les mélanges de ces composés.

Il est également connu d'obtenir une bonne rigidité grâce à l'utilisation de charges renforçantes selon un taux de charges approprié.

Depuis quelques années, la transition vers une industrie économe en matières premières est devenue une priorité. Il est donc souhaitable de fabriquer des compositions de caoutchouc en réduisant le volume de matériau utilisé. Cette réduction de volume implique nécessairement une réduction de la composante structurelle du pneumatique qui se traduit par une perte substantielle des propriétés de rigidité dudit pneumatique.

Il est alors recherché une augmentation de la rigidité, ou du moins une conservation des propriétés de rigidité, mais les techniques habituellement employées, c'est-à-dire l'utilisation de charges renforçantes et/ou d'un système de vulcanisation, n'empêchent pas la dégradation des propriétés de cohésion.

Il serait donc avantageux de fournir une composition de caoutchouc particulière présentant de bonnes propriétés de rigidité tout en conservant des propriétés de cohésion bonnes, voire améliorées.

La demanderesse a découvert qu'une nouvelle composition de caoutchouc à base d'une ou plusieurs particule(s) de polyéthylène réticulé conduisait à l'obtention d'excellentes propriétés de rigidité et de cohésion.

L'invention a donc pour objet une composition de caoutchouc à base d'un ou plusieurs élastomère(s) diénique(s), d'une ou plusieurs charge(s) renforçante(s), d'un système de réticulation et de particules de polyéthylène réticulé, lesdites particules présentant un diamètre moyen en volume inférieur à 300 µm.

Un autre objet de l'invention est un pneumatique pourvu d'une couche interne, ladite couche interne comprenant la composition de caoutchouc selon l'invention.

L'invention a également pour objet un procédé de préparation de la composition de caoutchouc selon l'invention.

L'invention ainsi que ses avantages seront aisément compris à la lumière de la description et des exemples de réalisations qui suivent.

Comme expliqué précédemment, la composition selon l'invention est à base d'un ou plusieurs élastomère(s) diénique(s), d'une ou plusieurs charge(s) renforçante(s), d'un système de réticulation et de particules de polyéthylène réticulé.

Par l'expression composition « à base de », il faut entendre, au sens de l'invention, une composition comportant le mélange et/ou le produit de réaction des différents constituants utilisés, certains de ces constituants de base étant susceptibles de, ou destinés à réagir entre eux, au moins en partie, lors des différentes phases de fabrication de la composition.

Dans la présente description, sauf indication expresse différente, tous les pourcentages (%) sont des pourcentages massiques.

D'autre part, tout intervalle de valeurs désigné par l'expression "entre a et b" représente le domaine de valeurs allant de plus de a à moins de b (c'est-à-dire bornes a et b exclues), tandis que tout intervalle de valeurs désigné par l'expression "de a à b" signifie le domaine de valeurs allant de a jusqu'à b (c'est-à-dire incluant les bornes strictes a et b).

Dans la présente demande, on entend par « partie pour cent d'élastomère » ou « pce », la partie en poids d'un constituant pour 100 parties en poids du ou des élastomères c'est-à-dire du poids total du ou des élastomères. Ainsi, un constituant à 60 pce signifiera par exemple 60 g de ce constituant pour 100 g d'élastomère.

La composition selon l'invention est à base d'un ou plusieurs élastomère(s) diénique(s), d'une ou plusieurs charge(s) renforçante(s), d'un système de réticulation et de particules de polyéthylène réticulé, lesdites particules présentant un diamètre moyen en volume inférieur à 300 µm. Le diamètre moyen en volume des particules, également appelé diamètre moyen De Broukere, noté D[4,3], est déterminé au moyen d'un granulomètre à diffraction laser, de marque « MALVERN Mastersizer 2000 » avec comme solvant l'éthanol.

De manière préférée, le diamètre moyen en volume des particules de polyéthylène réticulé est inférieur à 250 µm, de préférence inférieur ou égal à 200 µm.

De manière préférée, le diamètre moyen en volume des particules de polyéthylène réticulé est inférieur ou égal à 150 µm, de préférence inférieur à 100 µm.

De manière avantageuse, le polyéthylène est du polyéthylène de haute densité (PEHD), ou d'ultra haute masse moléculaire (UHMPE) ou de haut module (HMPE).

Préférentiellement, le taux de réticulation desdites particules de polyéthylène réticulé varie de 65 à 89%. Le taux de réticulation est mesuré selon la norme ASTM F876-13a de 2013.

Selon un mode de réalisation particulier de l'invention, lesdites particules de polyéthylène réticulé représentent de 1 à 40 pce, de préférence de 5 à 30 pce.

Avantageusement, la masse moléculaire du polyéthylène réticulé varie de 200000 à 6000000 g/mol.

Par élastomère diénique, doit être compris de manière connue un élastomère issu au moins en partie, c'est-à-dire un homopolymère ou un copolymère, de monomères diènes.

De manière connue en soi, un monomère diène est un monomère comprenant deux doubles liaisons carbone-carbone, conjuguées ou non.

Le ou les élastomères diéniques de la composition de caoutchouc selon l'invention peuvent être classés dans deux catégories : « essentiellement insaturés » ou « essentiellement saturés ».

On entend en général par « essentiellement insaturé », un élastomère diénique issu au moins en partie de monomères diènes conjugués, ayant un taux de motifs ou unités issues d'un diène conjugué qui est supérieur à 15 % en moles.

On entend en particulier par élastomère diénique « fortement insaturé » un élastomère diénique ayant un taux de motifs ou unités issues d'un diène conjugué qui est supérieur à 50 % en moles.

A l'inverse, on entend en général par « essentiellement saturé », un élastomère diénique issu au moins en partie de monomères diènes conjugués, ayant un taux de motifs ou unités issues d'un diène conjugué qui est inférieur ou égal à 15 % en moles.

C'est ainsi que des élastomères diéniques tels que certains caoutchoucs butyles ou les copolymères de diènes et d'alpha-oléfines type EPDM peuvent être qualifiés d'élastomères diéniques « essentiellement saturés ».

De manière préférée, le ou les élastomères diéniques de la composition de caoutchouc selon l'invention sont choisis parmi les élastomères diéniques essentiellement insaturés, et les mélanges de ces élastomères.

On entend plus particulièrement par élastomère diénique essentiellement insaturé :
(a) tout homopolymère obtenu par polymérisation d'un monomère diène conjugué ayant de 4 à 12 atomes de carbone ;
(b) tout copolymère obtenu par copolymérisation d'un ou plusieurs diènes conjugués entre eux ou avec un ou plusieurs composés vinyles aromatiques ayant de 8 à 20 atomes de carbone ;
(c) un copolymère ternaire obtenu par copolymérisation d'éthylène, d'une α-oléfine ayant de 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment le 1,4-hexadiène, l'éthylidène norbornène, le dicyclopentadiène,
(d) les mélanges de ces polymères.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinyles aromatiques conviennent par exemple le styrène, l'ortho-, méta-, para-méthylstyrène, le mélange commercial « vinyle-toluène », le para-tertiobutylstyrène, les méthoxystyrènes, les chlorostyrènes, le vinylmésitylène, le divinylbenzène, le vinylnaphtalène.

Lorsque le ou les élastomères diéniques essentiellement insaturés sont choisis parmi les copolymères obtenus par copolymérisation d'un ou plusieurs diènes conjugués entre eux ou avec un ou plusieurs composés vinyles aromatiques ayant de 8 à 20 atomes de carbone, ceux-ci peuvent contenir entre 99 % et 20 % en poids d'unités diéniques conjugués et entre 1 % et 80 % en poids d'unités vinyles aromatiques.

Les élastomères diéniques de la composition de caoutchouc selon l'invention peuvent avoir toute microstructure qui est fonction des conditions de polymérisation utilisées, notamment de la présence ou non d'un agent modifiant et/ou randomisant et des quantités d'agent modifiant et/ou randomisant employées.

Les élastomères diéniques de la composition de caoutchouc selon l'invention peuvent par exemple être préparés en dispersion ou en solution ; ils peuvent être couplés et/ou étoilés ou encore fonctionnalisés avec un agent de couplage et/ou d'étoilage ou de fonctionnalisation. Pour un couplage avec du noir de carbone, on peut citer par exemple des groupes fonctionnels comprenant une liaison C-Sn ou des groupes fonctionnels aminés tels que la benzophénone par exemple ; pour un couplage à une charge inorganique renforçante telle que la silice, on peut citer par exemple des groupes fonctionnels silanol ou polysiloxane ayant une extrémité silanol (tels que décrits par exemple dans FR 2 740 778 ou US 6,013,718), des groupes alkoxysilane (tels que décrits par exemple dans FR 2 765 882 ou US 5,977,238), des groupes carboxyliques (tels que décrits par exemple dans WO 01/92402 ou US 6,815,473, WO 2004/096865 ou US 2006/0089445) ou encore des groupes polyéthers (tels que décrits par exemple dans EP 1 127 909 ou US 6,503,973).

Comme autres exemples d'élastomères fonctionnalisés, on peut citer également des élastomères (tels que SBR, BR, NR ou IR) du type époxydés.

A titre d'élastomère diénique de la composition de caoutchouc selon l'invention, conviennent les polybutadiènes et en particulier ceux ayant une teneur (% molaire) en unités -1,2 comprise entre 4 % et 80 % ou ceux ayant une teneur (% molaire) en cis-1,4 supérieure à 80 %, les polyisoprènes, les copolymères de butadiène-styrène et en particulier ceux ayant une température de transition vitreuse, Tg, (mesurée selon ASTM D3418) comprise entre 0°C et -70°C et plus particulièrement entre -10°C et -60°C, une teneur en styrène comprise entre 5 % et 60 % en poids et plus particulièrement entre 20 % et 50 %, une teneur (% molaire) en liaisons -1,2 de la partie butadiénique comprise entre 4 % et 75 %, une teneur (% molaire) en liaisons trans-1,4 comprise entre 10 % et 80 %, les copolymères de butadiène-isoprène et notamment ceux ayant une teneur en isoprène comprise entre 5 % et 90 % en poids et une Tg de -40°C à -80°C, les copolymères isoprène-styrène et notamment ceux ayant une teneur en styrène comprise entre 5 % et 50 % en poids et une Tg comprise entre - 25°C et -50°C. Dans le cas des copolymères de butadiène-styrène-isoprène, conviennent notamment ceux ayant une teneur en styrène comprise entre 5 % et 50 % en poids, et plus particulièrement comprise entre 10 % et 40 %, une teneur en isoprène comprise entre 15 % et 60 % en poids, et plus particulièrement entre 20 % et 50 %, une teneur en butadiène comprise entre 5 % et 50 % en poids, et plus particulièrement comprise entre 20 % et 40 %, une teneur (% molaire) en unités -1,2 de la partie butadiénique comprise entre 4 % et 85 %, une teneur (% molaire) en unités trans -1,4 de la partie butadiénique comprise entre 6 % et 80 %, une teneur (% molaire) en unités -1,2 plus -3,4 de la partie isoprénique comprise entre 5 % et 70 % et une teneur (% molaire) en unités trans -1,4 de la partie isoprénique comprise entre 10 % et 50 %, et plus généralement tout copolymère butadiène-styrène-isoprène ayant une Tg comprise entre -20°C et -70°C.

Le ou les élastomères diéniques de la composition de caoutchouc selon l'invention peuvent être tout particulièrement choisis parmi les élastomères isoprèniques.

Par « élastomère isoprènique », on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

Parmi les copolymères d'isoprène, on citera en particulier les copolymères d'isoprène-styrène (SIR), d'isoprène-butadiène (BIR) ou d'isoprène-butadiène-styrène (SBIR).

De manière préférée, les élastomères isopréniques sont choisis parmi le caoutchouc naturel et le polyisoprène cis-1,4 de synthèse.

Parmi les polyisoprènes de synthèse, sont utilisés de préférence les polyisoprènes ayant un taux (% molaire) de liaisons cis-1,4 supérieur à 90 %, plus préférentiellement encore supérieur à 98 %.

De manière préférée, le ou les élastomères diéniques de la composition de caoutchouc selon l'invention sont choisis parmi les homopolymères obtenus par polymérisation d'un monomère diène conjugué ayant de 4 à 12 atomes de carbone, les copolymères obtenus par copolymérisation d'un ou plusieurs monomères diènes conjugués entre eux ou avec un ou plusieurs composés vinyles aromatiques ayant de 8 à 20 atomes de carbone, et les mélanges de ces polymères.

De manière particulièrement préférée, le ou les élastomères diéniques sont choisis parmi les polybutadiènes (en abrégé « BR »), le caoutchouc naturel (NR), les polyisoprènes de synthèse (IR), les copolymères de butadiène, les copolymères d'isoprène et les mélanges de ces élastomères. On peut citer en particulier les copolymères de butadiène-styrène (SBR), les copolymères d'isoprène-butadiène (BIR), les copolymères d'isoprène-styrène (SIR) et les copolymères d'isoprène-butadiène-styrène (SBIR).

La teneur en élastomères diéniques dans la composition de caoutchouc selon l'invention varie généralement de 50 à 100 pce, de préférence de 70 à 100 pce et, plus préférentiellement, tous les élastomères de la composition sont des élastomères diéniques (100 pce).

Comme énoncé précédemment, la composition de caoutchouc selon l'invention comprend également un système de réticulation.

Le système de réticulation peut être un système de vulcanisation. Dans ce cas, il est préférentiellement à base de soufre ou à base d'un donneur de soufre et d'un accélérateur primaire de vulcanisation.

Parmi les donneurs de soufre on peut citer par exemple les alkyl phénol disulfures (APDS) tel que par exemple le disulfure de para-tertiobutylphénol.

Le soufre est utilisé à un taux préférentiel allant de 0,5 à 10 pce, plus préférentiellement allant de 0,5 à 5 pce, en particulier de 0,5 à 3 pce.

On peut utiliser comme accélérateur primaire tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé « MBTS »), N-cyclohexyl-2-benzothiazyle sulfénamide (en abrégé « CBS »), N,N-dicyclohexyl-2-benzothiazyle sulfénamide (en abrégé « DCBS »), N-ter-butyl-2-benzothiazyle sulfénamide (en abrégé « TBBS »), N-ter-butyl-2-benzothiazyle sulfénimide (en abrégé « TBSI »), dibenzyldithiocarbamate de zinc (en abrégé « ZBEC ») et les mélanges de ces composés.

De préférence, on utilise un accélérateur primaire du type sulfénamide.

L'accélérateur primaire de vulcanisation doit permettre une réticulation des compositions de caoutchouc dans des temps industriellement acceptables, tout en préservant un délai minimum de sécurité (« temps de grillage ») au cours duquel les compositions peuvent être mises en forme sans risque de vulcanisation prématurée (« grillage »).

A ce système de vulcanisation de base peuvent venir s'ajouter divers accélérateurs secondaires ou activateurs de vulcanisation connus tels qu'oxyde de zinc, acide stéarique ou composés équivalents, dérivés guanidiques (en particulier diphénylguanidine).

La teneur de chaque accélérateur primaire ou secondaire de vulcanisation et de chaque activateur de vulcanisation varie généralement de 0,5 à 5,0 pce.

La composition de caoutchouc selon l'invention comprend en outre au moins une charge renforçante.

On peut utiliser tout type de charge renforçante connue pour ses capacités à renforcer une composition de caoutchouc utilisable pour la fabrication de pneumatiques, par exemple une charge organique tel que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à l'élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle aromatique fonctionnalisé telles que décrites dans les demandes WO-A-2006/069792 et WO-A-2006/069793.

Par "charge inorganique renforçante", doit être entendu dans la présente demande, par définition, toute charge inorganique ou minérale par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu, on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃).

De préférence, le ou les charges renforçantes sont choisies parmi la silice, le noir de carbone et leur mélange, et de préférence encore la charge renforçante est du noir de carbone.

De manière préférentielle, la ou les charges renforçantes (noir de carbone et/ou charge inorganique renforçante telle que silice) sont présentes à un taux allant de 20 à 200 pce, de préférence de 30 à 150 pce, de préférence encore de 40 à 80 pce.

L'optimum est de manière connue différent selon les applications particulières visées : le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que Poids Lourd.

Selon un mode de réalisation de l'invention, on utilise une charge renforçante comportant entre 30 et 150 pce, plus préférentiellement entre 30 et 120 pce de charge organique, particulièrement du noir de carbone.

Lorsque la charge renforçante comprend une charge nécessitant l'utilisation d'un agent de couplage pour établir la liaison entre la charge et l'élastomère diénique, la composition de caoutchouc comprend en outre, de manière classique, un agent susceptible d'assurer efficacement cette liaison. Lorsque la silice est présente dans la composition de caoutchouc à titre de charge renforçante, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits « symétriques » ou « asymétriques » selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits « symétriques » répondant à la formule générale (I) suivante :

Z - A - Sₓ - A - Z (I)

dans laquelle :
- x est un entier de 2 à 8, de préférence de 2 à 5 ;
- A est un radical hydrocarboné divalent, de préférence des groupements alkylène en C₁-C₁₈ ou des groupements arylène en C₆-C₁₂, plus particulièrement des alkylènes en C₁-C₁₀, notamment en C₁-C₄, en particulier le propylène ;
- Z répond à l'une des formules ci-après : 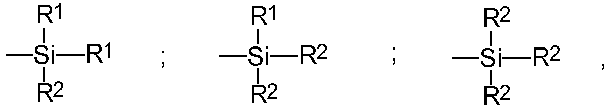 dans lesquelles :
   - les radicaux R¹, substitués ou non substitués, identiques ou différents entre eux, représentent un groupe alkyle en C₁-C₁₈, cycloalkyle en C₅-C₁₈ ou aryle en C₆-C₁₈, de préférence représentent des groupes alkyle en C₁-C₆, cyclohexyle ou phényle, notamment des groupes alkyle en C₁-C₄, et plus particulièrement représentent le méthyle et/ou l'éthyle,
   - les radicaux R², substitués ou non substitués, identiques ou différents entre eux, représentent un groupe alkoxyle en C₁-C₁₈ ou cycloalkoxyle en C₅-C₁₈, de préférence représentent un groupe choisi parmi alkoxyles en C₁-C₈ et cycloalkoxyles en C₅-C₈, plus préférentiellement encore représentent un groupe choisi parmi alkoxyles en C₁-C₄, et en particulier représentent un groupe méthoxyle et éthoxyle.

Dans le cas d'un mélange d'alkoxysilanes polysulfurés répondant à la formule (I) ci-dessus, notamment des mélanges usuels disponibles commercialement, la valeur moyenne des « x » est un nombre fractionnaire de préférence allant de 2 à 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane (R² = OH dans la formule I ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533 et WO 2006/125534.

Dans la composition de caoutchouc selon l'invention, la teneur en agent de couplage varie préférentiellement de 0,5 à 12 pce, étant entendu qu'il est en général souhaitable d'en utiliser le moins possible. La présence de l'agent de couplage dépend de celle de la charge inorganique renforçante autre que du noir de carbone. Son taux est aisément ajusté par l'homme du métier selon le taux de cette charge ; il est typiquement de l'ordre de 0,5 à 15 % en poids par rapport à la quantité de charge inorganique renforçante autre que du noir de carbone.

L'homme du métier comprendra qu'à titre de charge équivalente de la charge inorganique renforçante autre que noir de carbone, pourrait être utilisée une charge renforçante d'une autre nature, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et les élastomères diéniques.

La composition de caoutchouc selon l'invention peut également comprendre, des charges organiques renforçantes qui peuvent remplacer tout ou partie des noirs de carbone ou des autres charges inorganiques renforçantes décrites plus haut. Comme exemples de charges organiques renforçantes, on peut citer les charges organiques de polyvinyle fonctionnalisées telles que décrites dans les demandes WO-A-2006/069792, WO-A-2006/069793, WO-A-2008/003434 et WO-A-2008/003435.

La composition de caoutchouc selon l'invention peut comporter divers additifs usuellement connus de l'homme du métier. On citera par exemple des charges non renforçantes ou inertes, des plastifiants, des résines tackifiantes, des agents de protection tels que antioxydants ou antiozonants, anti-UV, divers agents de mise en oeuvre ou autres stabilisants, ou encore des promoteurs aptes à favoriser l'adhésion au reste de la structure de l'objet pneumatique.

Dans le cas où la composition comprend un plastifiant, la teneur est préférentiellement inférieure à 100 pce, et plus préférentiellement pour une application en sous-couche de bande de roulement, la teneur en plastifiant est inférieure à 20 pce, plus préférentiellement inférieure à 10 pce.

Un autre objet de l'invention est un pneumatique pourvu d'une couche interne, ladite couche interne comprenant au moins une composition de caoutchouc selon l'invention.

En effet, il est possible de définir au sein du pneumatique trois types de zones :
- La zone radialement extérieure et en contact avec l'air ambiant, cette zone étant essentiellement constituée de la bande de roulement et du flanc externe du pneumatique. Un flanc externe est une couche élastomérique disposée à l'extérieur de l'armature de carcasse par rapport à la cavité interne du pneumatique, entre le sommet et le bourrelet de sorte à couvrir totalement ou partiellement la zone de l'armature de carcasse s'étendant du sommet au bourrelet.
- La zone radialement intérieure et en contact avec le gaz de gonflage, cette zone étant généralement constituée par la couche étanche au gaz de gonflage, parfois appelée gomme intérieure (« inner liner » en anglais).
- La zone interne du pneumatique, c'est-à-dire celle comprise entre les zones extérieures et intérieures. Cette zone inclut des couches ou nappes qui sont appelées ici couches internes du pneumatique.

Les couches internes selon la présente invention sont donc celles comprises dans la zone interne du pneumatique, c'est-à-dire celles comprises entre les zones extérieure et intérieure. Ces couches internes sont sans contact direct ni avec l'air ambiant, ni avec le gaz de gonflage, elles peuvent donc être n'importe quelle couche de pneumatique sauf celles qui sont radialement extérieures ou radialement intérieures au pneumatique. Elles peuvent être par exemple des nappes carcasses, des sous-couches de bande de roulement, des nappes de ceintures de pneumatiques, des mélanges de calandrage de câbles ou de tringles, des nappes de renfort ou tout autre couche de la zone interne du pneumatique.

L'invention a également pour objet un procédé de préparation de la composition de caoutchouc selon l'invention comprenant les étapes suivantes :
a) incorporer à un ou plusieurs élastomères diéniques les particules de polyéthylène réticulé, et la ou les charge(s) renforçante(s), en malaxant thermomécaniquement le tout, en une ou plusieurs fois, jusqu'à atteindre une température maximale comprise entre 110°C et 190°C, puis
b) incorporer au mélange le système de réticulation et malaxer le tout jusqu'à une température maximale inférieure à 90°C.

Alternativement, le polyéthylène réticulé peut être incorporé au cours de l'étape b) ci-dessus.

La composition est fabriquée dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 90°C, par exemple entre 40°C et 90°C, phase de finition au cours de laquelle est incorporé le système de réticulation.

De manière préférée, les particules de polyéthylène réticulé sont, préalablement à l'étape a), fabriquées à partir de polyéthylène haute densité.

Avantageusement, les particules de polyéthylène réticulé sont fabriquées par un procédé de réticulation du polyéthylène choisi parmi un procédé de réticulation à l'aide d'un peroxyde (procédé PEX-A), un procédé de réticulation par irradiation (procédé PEX-C) et un procédé de réticulation par addition de silane (PEX-B).

Ces trois procédés de réticulation du polyéthylène sont trois procédés bien connus par l'homme du métier.

Dans le procédé de réticulation du polyéthylène à l'aide d'un peroxyde, les radicaux libres dudit peroxyde attaquent les chaînes de polyéthylène. Lesdites chaînes de polyéthylène réagissent entre elles pour former un réseau réticulé de haute masse moléculaire.

Le procédé de réticulation du polyéthylène par irradiation utilise un accélérateur d'électrons de grande énergie. Le mécanisme est semblable au procédé de réticulation à l'aide d'un peroxyde car le procédé consiste, par bombardement d'électrons, à produire des radicaux libres pour le pontage des chaînes de polyéthylène.

Le procédé de réticulation du polyéthylène par addition de silane consiste dans un premier temps à greffer le polyéthylène avec un silane, tel que le vinyle éthoxysilane, par addition radicalaire à l'aide d'un peroxyde. Dans un second temps, la réticulation du polyéthylène ainsi greffé est réalisée par hydrolyse puis par condensation. Le procédé de réticulation peut également se dérouler en une seule étape.

Les particules de polyéthylène réticulé peuvent être ensuite produites par broyage de tuyaux ou plaques de polyéthylène réticulé ou à partir de poudre de polyéthylène.

### EXEMPLES

### Mesures et tests utilisés

### Mesure du diamètre moyen des particules

Le diamètre moyen en volume des particules, également appelé diamètre moyen De Broukere, noté D[4,3], est déterminé au moyen d'un granulomètre à diffraction laser, de marque « MALVERN Mastersizer 2000 » avec comme solvant l'éthanol.

### Essais de traction

Ces essais de traction permettent de déterminer les contraintes d'élasticité et les propriétés à la rupture. Sauf indication différente, ils sont effectués conformément à la norme française NF T 46-002 de septembre 1988. On mesure en seconde élongation (i.e., après un cycle d'accommodation au taux d'extension prévu pour la mesure elle-même) le module sécant nominal (ou contrainte apparente, en MPa) à 100% d'allongement (notés MA100). Le module sécant nominal permet d'apprécier la rigidité du matériau.

Les contraintes à la rupture (en MPa) et les allongements à la rupture (en %) sont mesurés à 23°C ± 2°C, et dans les conditions normales d'hygrométrie (50 ± 5% d'humidité relative).

Le produit de l'allongement à la rupture et de la contrainte à la rupture donne l'énergie à la rupture. Les trois grandeurs permettent d'apprécier la cohésion du matériau.

### Préparation des compositions

### 1) Préparation des particules de polyéthylène réticulé

Les particules de polyéthylène réticulé peuvent être préparées par tout moyen connu de l'homme de l'art. Par exemple, il peut s'agir d'un broyat de polyéthylène réticulé, tel que disponible dans le commerce, par exemple sous forme de tuyaux de polyéthylène. Elles peuvent être également obtenues par réticulation de poudres de polyéthylène, par tout moyen connu de l'homme de l'art et notamment par bombardement électronique.

### 2) Procédé de préparation des compositions

Les compositions de caoutchouc sont préparées dans des mélangeurs appropriés, en utilisant deux phases de préparation successives selon une procédure générale bien connue de l'homme du métier.

On introduit dans un mélangeur interne, rempli à 70% et dont la température initiale de cuve est d'environ 90°C, le ou les élastomères diéniques, les particules de polyéthylène réticulé, la ou les charges renforçantes, puis, après une à deux minutes de malaxage, les divers autres ingrédients à l'exception du système de réticulation. On conduit alors un travail thermomécanique (phase non-productive) en une étape (durée totale du malaxage égale à environ 5 min), jusqu'à atteindre une température maximale de "tombée" d'environ 160°C. On récupère le mélange ainsi obtenu, on le refroidit puis on ajoute le système de réticulation sur un mélangeur externe (homo-finisseur) à 70°C, en mélangeant le tout (phase productive) pendant environ 5 à 6 min.

Ici, la mise en oeuvre des compositions de caoutchouc est effectuée au moyen d'un mélangeur du type Haake RM 3000 de 360 cm³ avec des palettes de type CAM.

Les compositions ainsi obtenues sont ensuite calandrées soit sous la forme de plaques (épaisseur de 2 à 3 mm) ou de feuilles fines de caoutchouc pour la mesure de leurs propriétés mécaniques.

### 3) Formulation des compositions

Trois compositions de caoutchouc selon l'invention (compositions D, E et F) et quatre compositions de caoutchouc comparatives (compositions A, B, C et G) ont été préparées à partir des ingrédients et des teneurs présentés dans le tableau 1 ci-dessous. Les teneurs sont exprimées en pce. Les particules de polyéthylène réticulé présentent un diamètre moyen en volume de 90, 200 ou 500 µm.

**Tableau 1**

| **Composition** | A (Comp) | B (Comp) | C (Comp) | **D (Inv)** | **E (Inv)** | **F (Inv)** | G (comp) |
|---|---|---|---|---|---|---|---|
| Caoutchouc naturel | 50 | 50 | 50 | 50 | 50 | 50 | 50 |
| Caoutchouc butadiène⁽¹⁾ | 50 | 50 | 50 | 50 | 50 | 50 | 50 |
| Noir de carbone⁽²⁾ | 52 | 52 | 62 | 52 | 52 | 52 | 52 |
| Antioxydant ⁽³⁾ | 2 | 2 | 2 | 2 | 2 | 2 | 2 |
| Acide stéarique | 1 | 1 | 1 | 1 | 1 | 1 | 1 |
| ZnO | 3 | 3 | 3 | 3 | 3 | 3 | 3 |
| Soufre | 1 | 6 | 1 | 1 | 1 | 1 | 1 |
| Accélérateur de vulcanisation ⁽⁴⁾ | 1 | 1 | 1 | 1 | 1 | 1 | 1 |
| **Particules de PER-1⁽⁵⁾** | - | - | - | **10** | **25** | **-** | **-** |
| Particules de PER-2⁽⁶⁾ | - | - | - | - | - | **25** | - |
| Particules de PER-3⁽⁷⁾ | - | - | - | - | - | - | 25 |

| | | | | | | | |
|---|---|---|---|---|---|---|---|
| (1) Polybutadiène avec 4% de motifs 1,2 et 93% de motifs 1,4 cis (Tg = -106°C), (2) noir de carbone N234, (3) N-(1,3-diméthylbutyl)-N'-phényl-p-phénylènediamine « 6-PPD » de la société Flexsys, (4) N-cyclohexyl-2-benzothiazol-sulfénamide « Santocure CBS » de la société Flexsys. (5) PER-1 : Particules de polyéthylène réticulé présentant un diamètre moyen en volume de 90 µm. (6) PER-2 : Particules de polyéthylène réticulé présentant un diamètre moyen en volume de 200 µm. (7) PER-3 : Particules de polyéthylène réticulé présentant un diamètre moyen en volume de 500 µm. | | | | | | | |

La composition A est une composition comparative dite témoin.

La composition B est une composition comparative présentant un taux de soufre supérieur aux autres compositions.

La composition C est une composition comparative présentant un taux de noir de carbone supérieur aux autres compositions.

La composition D est une composition selon l'invention qui présente le même taux de soufre et de noir de carbone que la composition A mais qui comprend en plus 10 pce de particules de polyéthylène réticulé présentant un diamètre moyen en volume de 90 µm.

La composition E est une composition selon l'invention qui présente le même taux de soufre et de noir de carbone que la composition A mais qui comprend en plus 25 pce de particules de polyéthylène réticulé présentant un diamètre moyen en volume de 90 µm.

La composition F est une composition selon l'invention qui présente le même taux de soufre et de noir de carbone que la composition A mais qui comprend en plus 25 pce de particules de polyéthylène réticulé présentant un diamètre moyen en volume de 200 µm.

La composition G est une composition comparative qui présente le même taux de soufre et de noir de carbone que la composition A mais qui comprend en plus 25 pce de particules de polyéthylène réticulé présentant un diamètre moyen en volume de 500 µm.

### Résultats

Les propriétés mécaniques sont présentées dans le tableau 2.

**Tableau 2**

| Composition | A (comp) | B (comp) | C (comp) | **D (inv)** | **E (inv)** | **F (inv)** | G (comp) |
|---|---|---|---|---|---|---|---|
| MA 100 (MPa) | 5,4 | 7,8 | 7,5 | **6,8** | **7,6** | **7,4** | 6,3 |
| Allongement rupture (%) | 510 | 430 | 460 | **640** | **620** | **520** | 400 |
| Energie rupture (MJ) | 107 | 86 | 105 | **128** | **130** | **85** | 44 |

Conformément à ce qui est classiquement attendu, la composition B présente un module sécant MA100 supérieur à celui de la composition A du fait de la présence d'un taux de soufre supérieur. La composition B présente donc une meilleure rigidité. En revanche, on observe une baisse des propriétés de cohésion avec un allongement à la rupture et une énergie à la rupture moins élevés.

De la même manière, la composition C présente un module sécant MA100 similaire à celui de la composition B, donc supérieur à celui de la composition A du fait de la présence d'un taux de noir de carbone supérieur. Une baisse des propriétés de cohésion par rapport à la composition A est également observé.

La composition D, alors qu'elle ne présente ni de taux de soufre ni de taux de noir de carbone supérieur à ceux de la composition A, présente un module sécant MA100 supérieur à celui de la composition A. Cette amélioration des propriétés de rigidité est liée à la présence des particules de polyéthylène réticulé. En revanche, les propriétés de cohésion sont nettement meilleures non seulement par rapport à celles de la composition A mais aussi à celles des compositions B et C.

La composition E présente quant à elle des propriétés de rigidité similaires à celles des compositions B et C. Par contre, elle présente des propriétés de cohésion nettement meilleures que celles des compositions A, B et C.

La composition F présente des propriétés de rigidité similaires à celles des compositions B, C et E. En revanche, ses propriétés d'allongement rupture sont supérieures à celles des compositions B et C.

La composition G présente des propriétés de rigidité supérieures à celles de la composition A mais plus faibles que celles des compositions, B à F. Les propriétés de cohésion sont les plus faibles parmi toutes les compositions exemplifiées.

Ces résultats indiquent que l'utilisation de particules de polyéthylène réticulé présentant un diamètre moyen en volume inférieur à 300 µm dans une composition de caoutchouc permet à ladite composition de présenter à la fois de bonnes propriétés de rigidité et des propriétés de cohésion améliorées.

## Revendications

1. Composition de caoutchouc à base d'un ou plusieurs élastomère(s) diénique(s), d'une ou plusieurs charge(s) renforçante(s), d'un système de réticulation et de particules de polyéthylène réticulé, **caractérisée en ce que** les particules présentent un diamètre moyen en volume inférieur à 300 µm.

2. Composition selon la revendication 1, **caractérisée en ce que** le diamètre moyen en volume des particules de polyéthylène réticulé est inférieur à 250 µm, de préférence inférieur ou égal à 200 µm.

3. Composition selon l'une quelconque des revendications 1 à 2, **caractérisée en ce que** le diamètre moyen en volume des particules de polyéthylène réticulé est inférieur ou égal à 150 µm, de préférence inférieur à 100 µm.

4. Composition selon l'une quelconque des revendications précédentes, **caractérisée en ce que** le polyéthylène est du polyéthylène de haute densité (PEHD) ou d'ultra haute masse moléculaire (UHMPE) ou de haut module (HMPE).

5. Composition selon l'une quelconque des revendications précédentes, **caractérisée en ce que** le taux de réticulation des particules de polyéthylène réticulé varie de 65 à 89%.

6. Composition selon l'une quelconque des revendications précédentes, **caractérisée en ce que** lesdites particules représentent de 1 à 40 pce, de préférence de 5 à 30 pce.

7. Composition selon l'une quelconque des revendications précédentes, **caractérisée en ce que** la masse moléculaire du polyéthylène réticulé varie de 200000 à 6000000 g/mol.

8. Composition selon l'une quelconque des revendications précédentes, **caractérisée en ce que** le ou les élastomères diéniques sont choisis parmi les polybutadiènes, le caoutchouc naturel, les polyisoprènes de synthèse, les copolymères de butadiène, les copolymères d'isoprène et les mélanges de ces élastomères.

9. Composition selon l'une quelconque des revendications précédentes, **caractérisée en ce que** la ou les charges renforçantes sont choisies parmi la silice, le noir de carbone et leur mélange, de préférence le noir de carbone.

10. Composition selon l'une quelconque des revendications précédentes, **caractérisée en ce que** la ou les charges renforçantes sont présentes à un taux allant de 20 à 200 pce, de préférence de 30 à 150 pce, de préférence encore de 40 à 80 pce.

11. Pneumatique pourvu d'une couche interne, ladite couche interne comprenant au moins une composition de caoutchouc telle que définie à l'une quelconque des revendications 1 à 10.

12. Procédé de préparation d'une composition de caoutchouc telle que définie à l'une quelconque des revendications 1 à 10, **caractérisé en ce qu'**il comprend les étapes suivantes :
a) incorporer à un élastomère diénique les particules de polyéthylène réticulé et la ou les charge(s) renforçante(s), en malaxant thermomécaniquement le tout, en une ou plusieurs fois, jusqu'à atteindre une température maximale comprise entre 110°C et 190°C, puis
b) incorporer au mélange le système de réticulation et malaxer le tout jusqu'à une température maximale inférieure à 90°C.

13. Procédé selon la revendication 12, **caractérisé en ce que** les particules de polyéthylène réticulé sont, préalablement à l'étape a), fabriquées à partir de polyéthylène haute densité.

14. Procédé selon la revendication 13, **caractérisé en ce que** les particules de polyéthylène réticulé sont fabriquées par un procédé de réticulation du polyéthylène choisi parmi un procédé de réticulation à l'aide d'un peroxyde, un procédé de réticulation par irradiation et un procédé de réticulation par addition de silane.

## Patentansprüche

1. Kautschukzusammensetzung auf Basis von einem oder mehreren Dienelastomeren, einem oder mehreren verstärkenden Füllstoffen, einem Vernetzungssystem und Teilchen von vernetztem Polyethylen, **dadurch gekennzeichnet, dass** die Teilchen einen volumenmittleren Durchmesser kleiner 300 µm aufweisen.

2. Zusammensetzung nach Anspruch 1, **dadurch gekennzeichnet, dass** der volumenmittlere Durchmesser der Teilchen von vernetztem Polyethylen kleiner als 250 µm, vorzugsweise kleiner oder gleich 200 µm, ist.

3. Zusammensetzung nach einem der Ansprüche 1 bis 2, **dadurch gekennzeichnet, dass** der volumenmittlere Durchmesser der Teilchen von vernetztem Polyethylen kleiner oder gleich 150 µm, vorzugsweise kleiner 100 µm, ist.

4. Zusammensetzung nach einem der vorhergehenden Ansprüche, **dadurch gekennzeichnet, dass** es sich bei dem Polyethylen um ein Polyethylen hoher Dichte (HDPE) oder ultrahochmolekulares Polyethylen (UHMWPE) oder hochmoduliges Polyethylen (HMPE) handelt.

5. Zusammensetzung nach einem der vorhergehenden Ansprüche, **dadurch gekennzeichnet, dass** der Vernetzungsgrad der Teilchen von vernetztem Polyethylen von 65 bis 89 % variiert.

6. Zusammensetzung nach einem der vorhergehenden Ansprüche, **dadurch gekennzeichnet, dass** die Teilchen 1 bis 40 phe, vorzugsweise 5 bis 30 phe, ausmachen.

7. Zusammensetzung nach einem der vorhergehenden Ansprüche, **dadurch gekennzeichnet, dass** das Molekulargewicht des vernetzten Polyethylens von 200.000 bis 6.000.000 g/mol variiert.

8. Zusammensetzung nach einem der vorhergehenden Ansprüche, **dadurch gekennzeichnet, dass** das bzw. die Dienelastomere aus Polybutadienen, Naturkautschuk, synthetischen Polyisoprenen, Butadien-Copolymeren, Isopren-Copolymeren und Mischungen dieser Elastomere ausgewählt sind.

9. Zusammensetzung nach einem der vorhergehenden Ansprüche, **dadurch gekennzeichnet, dass** der bzw. die verstärkenden Füllstoffe aus Kieselsäure, Ruß und Mischungen davon, vorzugsweise Ruß, ausgewählt sind.

10. Zusammensetzung nach einem der vorhergehenden Ansprüche, **dadurch gekennzeichnet, dass** der bzw. die verstärkenden Füllstoffe in einem Gehalt im Bereich von 20 bis 200 phe, vorzugsweise von 30 bis 150 phe, weiter bevorzugt von 40 bis 80 phe, vorliegen.

11. Reifen mit einer Innenschicht, wobei die Innenschicht mindestens eine Kautschukzusammensetzung gemäß einem der Ansprüche 1 bis 10 umfasst.

12. Verfahren zur Herstellung einer Kautschukzusammensetzung gemäß einem der Ansprüche 1 bis 10, **dadurch gekennzeichnet, dass** man:
a) in ein Dienelastomer die Teilchen von vernetztem Polyethylen und den bzw. die verstärkenden Füllstoffe einarbeitet, indem man das Ganze ein- oder mehrmals bis zum Erreichen einer Höchsttemperatur zwischen 110 °C und 190 °C thermomechanisch knetet und dann
b) das Vernetzungssystem in die Mischung einarbeitet und das Ganze bis zu einer Höchsttemperatur von weniger als 90 °C knetet.

13. Verfahren nach Anspruch 12, **dadurch gekennzeichnet, dass** die Teilchen von vernetztem Polyethylen vor Schritt a) aus Polyethylen hoher Dichte hergestellt werden.

14. Verfahren nach Anspruch 13, **dadurch gekennzeichnet, dass** die Teilchen von vernetztem Polyethylen durch ein Verfahren zur Vernetzung von Polyethylen, das aus einem Verfahren zur Vernetzung unter Verwendung eines Peroxids, einem Verfahren zur Vernetzung durch Bestrahlung und einem Verfahren zur Vernetzung durch Zugabe von Silan ausgewählt wird, hergestellt werden.

## Claims

1. Rubber composition based on one or more diene elastomer(s), on one or more reinforcing filler(s), on a crosslinking system and on particles of crosslinked polyethylene, **characterized in that** the particles have a volume-average diameter of less than 300 µm.

2. Composition according to Claim 1, **characterized in that** the volume-average diameter of the particles of crosslinked polyethylene is less than 250 µm, preferably less than or equal to 200 µm.

3. Composition according to either of Claims 1 and 2, **characterized in that** the volume-average diameter of the particles of crosslinked polyethylene is less than or equal to 150 µm, preferably less than 100 µm.

4. Composition according to any one of the preceding claims, **characterized in that** the polyethylene is high-density polyethylene (HDPE), or ultrahigh-molecular-weight polyethylene (UHMWPE), or high-modulus polyethylene (HMPE).

5. Composition according to any one of the preceding claims, **characterized in that** the degree of crosslinking of the particles of crosslinked polyethylene varies from 65 to 89%.

6. Composition according to any one of the preceding claims, **characterized in that** said particles represent from 1 to 40 phr, preferably from 5 to 30 phr.

7. Composition according to any one of the preceding claims, **characterized in that** the molecular weight of the crosslinked polyethylene varies from 200 000 to 6 000 000 g/mol.

8. Composition according to any one of the preceding claims, **characterized in that** the diene elastomer(s) are selected from polybutadienes, natural rubber, synthetic polyisoprenes, butadiene copolymers, isoprene copolymers and the mixtures of these elastomers.

9. Composition according to any one of the preceding claims, **characterized in that** the reinforcing filler(s) are selected from silica, carbon black and their mixture, preferably carbon black.

10. Composition according to any one of the preceding claims, **characterized in that** the reinforcing filler(s) are present at a content ranging from 20 to 200 phr, preferably from 30 to 150 phr, more preferably still from 40 to 80 phr.

11. Tyre provided with an inner layer, said inner layer comprising at least one rubber composition as defined in any one of Claims 1 to 10.

12. Process for preparing a rubber composition as defined in any one of Claims 1 to 10, **characterized in that** it comprises the following steps:
a) incorporating the particles of crosslinked polyethylene and the reinforcing filler(s) in a diene elastomer, everything being kneaded thermomechanically, in one or more times, until a maximum temperature of between 110°C and 190°C is reached, then
b) incorporating the crosslinking system in the mixture and kneading everything up to a maximum temperature of less than 90°C.

13. Process according to Claim 12, **characterized in that** the particles of crosslinked polyethylene are, prior to step a), produced from high-density polyethylene.

14. Process according to Claim 13, **characterized in that** the particles of crosslinked polyethylene are produced by a process for crosslinking the polyethylene, selected from a process for crosslinking using a peroxide, a process for crosslinking by irradiation and a process for crosslinking by silane addition.
